# EUROPÄISCHE PATENTANMELDUNG

(11) **EP 0 844 723 A2**
(43) Veröffentlichungstag der Anmeldung: **27.05.1998**
(21) Anmeldenummer: 97890233.6
(22) Anmeldetag: 25.11.1997
(51) Int. Cl.: H02K 5/128, F04D 13/06

(54) **Elektromotorisch angetriebene Pumpe**

(30) Priorität: 25.11.1996 AT 2050/96
(71) Anmelder: Flender Austria Antriebstechnik Aktiengesellschaft, 8724 Spielberg (Steiermark) (AT)
(72) Erfinder: Konrad, Peter, Dr., 8750 Judenburg (AT); Kurz, Anton, 8740 Zeltweg (AT); Müller, Werner, 8740 Zeltweg (AT); Peinsitt, Helmuth, 9400 Wolfsberg (AT); Schrödl, Manfred, Dr., 7223 Sieggraben (AT); Steinberger, Gerhard, 8753 Fohnsdorf (AT); Vogl, Rainer, 8742 Rötsch 8a (AT)
(74) Vertreter: Hehenberger, Reinhard, Dipl.-Ing.

(57) **Zusammenfassung**

Eine Pumpe, die von einem synchronlaufenden Elektromotor angetrieben wird, weist eine hohl ausgeführte Rotorwelle (1) für die Zufuhr von Flüssigkeit zu einem Laufrad (2) der Pumpe auf, das an einem Ende der Rotorwelle (1) angeordnet ist. Der Raum, in dem der Stator (8) angeordnet ist, und der Raum, in dem der Rotor (6) angeordnet ist, sind flüssigkeitsdicht durch ein Spaltrohr (12) aus Kunststoff voneinander getrennt. Spaltrohre aus Kunststoff weisen den Vorteil auf, daß Sie den Magnetfluß zwischen Stator (8) und Rotor (6) nicht behindern.

Um das Spaltrohr (12) mit möglichst kleiner Wandstärke ausführen zu können, liegt das Spaltrohr (12) an der Innenseite des Stators (8) an, so daß es gegen Innendrücke vom Stator (8) gestützt wird. Damit das Spaltrohr (12) auch in den Randbereichen (31, 32), in denen es nicht vom Stator (8) gestützt wird, nicht durch den Innendruck bricht, ist die Wandstärke des Spaltrohres (12) in den Bereichen (31, 32), in denen es über den Stator (8) hinausragt, größer als im Bereich des Stators (8).

## Beschreibung

Die Erfindung betrifft eine Pumpe, die von einem synchronlaufenden Elektromotor angetrieben wird, wobei die Rotorwelle des Elektromotors für die Zufuhr von Flüssigkeit zu einem Laufrad der Pumpe, das an einem Ende der Rotorwelle angeordnet ist, vorzugsweise hohl ausgeführt ist.

Derartige Motoren sind z.B. aus der DE 38 22 897 A1, der US 5 288 215 A und der FR 2 608 228 A1 bekannt. Synchron mit Speisefrequenz laufende Motoren haben den Vorteil, daß sie durch eine Leistungselektronik sehr gut regelbar sind, wodurch besonders in der Anlauf- bzw. Losbrechphase hohe Drehmomente aufgebracht werden können.

Um den Stator vor der zu pumpenden Flüssigkeit zu schützen, ist es z.B. aus der DE 41 11 466 A1 und der DE 21 00 155 A bekannt, den Teil des Motorgehäuses, in dem sich der Stator befindet, mittels eines Spaltrohres vom mit Flüssigkeit gefüllten Raum, in dem sich der Rotor dreht, zu trennen. Diese Spaltrohre bestehen aus metallischen Werkstoffen, da diese eine ausreichende mechanische Festigkeit aufweisen, um den teilweise relativ hohen Innendrücken zu widerstehen, anderseits aber eine möglichst geringe Wandstärke aufweisen sollen, um den Abstand bzw. den Spalt zwischen dem Stator und dem Rotor nicht durch eine zu große Wandstärke so weit zu vergrößern, daß unzulässig hohe magnetische Verluste auftreten.

Auf der anderen Seite sind allerdings Spaltrohre aus metallischem Werkstoff, insbesondere bei größeren Wandstärken, dem Magnetfluß hinderlich, so daß je nach Motorart und Baugröße des Motors Leistungsverluste von 5 % oder mehr auftreten können.

Der vorliegenden Erfindung liegt daher die Aufgabe zugrunde, eine Pumpe der eingangs genannten Gattung mit einem Spaltrohr auszustatten, bei welchem die magnetischen Verluste zwischen Stator und Rotor im Vergleich zum Stand der Technik vermindert werden.

Gelöst wird diese Aufgabe dadurch, daß der Raum, in dem der Stator angeordnet ist, und der Raum, in dem der Rotor angeordnet ist, flüssigkeitsdicht durch ein Spaltrohr aus Kunststoff voneinander getrennt sind.

Die Erfindung macht sich die Eigenschaft von Kunststoffen zunutze, daß sie den magnetischen Fluß nicht behindern, wobei bei geeigneter Wahl der Kunststoffe die Wandstärke des Spaltrohres sehr gering gehalten werden kann.

Um die Wandstärke des Spaltrohres weiter verringern zu können, um den Spalt zwischen Stator und Rotor möglichst klein zu halten bzw. um bei der Wahl des Kunststoffes auch auf nicht so hochwertige Materialien zurückgreifen zu müssen, die den vorhandenen Drücken bzw. Temperaturn problemlos standhalten können, wird in Weiterbildung der Erfindung vorgeschlagen, daß das Spaltrohr an der Innenseite des Stators anliegt.

Bei dieser Ausführungsform der Erfindung wird das Spaltrohr direkt durch den Stator gestützt, wodurch Verformungen des Spaltrohres in diesem Bereich hintangehalten werden.

Ein Problem können dabei allerdings die Bereiche bilden, in denen die Rohrenden über den Stator vorragen, soferne sie dort nicht durch gesonderte Maßnahmen von außen gestützt werden. Um auch dieses Problem zu lösen, kann erfindungsgemäß vorgesehen sein, daß die Wandstärke des Spaltrohres im Bereich, in dem es über den Stator hinausragt, größer als im Bereich des Stators ist. Bei dieser Ausführungsform kann das Spaltrohr in dem Bereich, in dem es vom Stator gestützt wird, und somit auch der Spalt zwischen Stator und Rotor sehr dünn bzw. klein ausgeführt werden, so daß der Magnetfluß in diesem Bereich sehr gut ist. In den kritischen Bereichen neben dem Stator, in welchem das Spaltrohr den Innendrücken gegebenfalls ungestützt ausgesetzt ist, ist das Spaltrohr verstärkt, so daß es auch hier zu keinen unzulässigen Verformungen des Spaltrohres oder sogar zu einem Platzen des Spaltrohres kommen kann.

Um das Einbauen eines derart ausgeführten Spaltrohres zu ermöglichen bzw. zu erleichtern, kann vorgesehen sein, daß die Wandstärke des Spaltrohres an einem Ende bei im wesentlichen konstantem Innendurchmesser radial nach außen und am anderen Ende bei im wesentlichen konstantem Außendurchmesser radial nach innen vergrößert ist. Diese Ausbildung des Spaltrohres ermöglicht, daß der Stator von der einen Seite (dem nach innen verstärkten Ende) und der Rotor von der anderen Seite (dem nach außen verstärkten Ende) am Spaltrohr montiert wird, was einen sehr einfachen Zusammenbau ermöglicht.

Es versteht sich, daß im Rahmen der Erfindung auch Abänderungen der vorbeschriebenen Ausführungsformen der Erfindung möglich sind, indem z.B. nur ein Ende des Spaltrohres verstärkt ausgeführt ist, wobei das andere Ende z.B. durch bauliche Maßnahmen am Stator oder am Motorgehäuse von außen gestützt wird.

In einer alternativen Ausführungsform kann auch vorgesehen sein, daß das Spaltrohr mit Teilen des Stators, vorzugsweise mit der Nutisolation, einstückig ausgebildet ist. Das Spaltrohr kann bei dieser Ausführungsform bei üblicherweise im Spritzgußverfahren hergestellten Nutisolationen gleich mitgespritzt werden, was eine erhebliche Vereinfachung der Herstellung der Pumpe bzw. des Motors und somit eine kostengünstigere Herstellung erlaubt.

Auch bei der letztgenannten Ausführungsform kann beispielsweise die Wandstärke an einem Ende des Spaltrohres nach innen und am anderen Ende nach außen verstärkt werden.

Eine bevorzugte Ausführungsform der Erfindung ist dadurch gekennzeichnet, daß auf der Rotorwelle des Elektromotors Permanentmagnete angeordnet sind, denen ein Stator mit einer Wicklung mit einer Strangzahl sowie einer Phasenzahl gleich oder größer 1 zugeordnet ist. Die Verwendung von Permanentmagneten auf der Rotorwelle stellt eine sowohl hinsichtlich der Wartung (es sind keine Bürsten bzw. Kommutatoren erforderlich) als auch der Regelbarkeit in Verbindung mit einer Leistungselektronik günstige Ausführungsform dar.

Weitere Merkmale und Vorteile der Erfindung ergeben sich aus den übrigen Unteransprüchen und der nachfolgenden Beschreibung einer bevorzugten Ausführungsform der Erfindung. Es zeigt
Fig. 1 eine erfindungsgemäße Pumpe im Schnitt,
Fig. 2 eine Ansicht auf die Pumpe von Fig. 1 von rechts und
Fig. 3 schematisch eine bevorzugte Ausführungsform eines Spaltrohres.

Die erfindungsgemäße Pumpe weist eine hohle Rotorwelle 1 mit einer Bohrung 22 auf, die im Gehäuse über Lager 3, die bevorzugt als Gleitlager ausgeführt sind, gelagert ist. Ein Gleitlager 3 ist an dem Ende der Rotorwelle 1 angeordnet, an welchem ein Laufrad 2 auf der Rotorwelle 1 befestigt ist, und in einem Flansch 14 des Motorgehäuses aufgenommen. Ein zweites Gleitlager 3 ist dem vom Laufrad 2 abgewandten Ende der Rotorwelle 1 zugeordnet und in einem Rohranschluß 17 aufgenommen, der ebenfalls einen Teil des Motorgehäuses bildet.

Zwischen den Gleitlagern 3 ist auf der Rotorwelle 1 ein Rotorblech 6 angeordnet, das durch Manschetten 5 und Anlaufscheiben 4 von den Gleitlagern 3 getrennt ist. Auf dem Rotorblech 6 sind Permanentmagnete 7 angeordnet.

Den Permanentmagneten 7 ist ein Stator 8 zugeordnet, der ein Statorblech sowie von diesem durch eine Nutisolation 9 getrennte Wicklungen 10 aufweist. Die Wicklungen 10 sind durch Wickelkopfkappen 11 vor äußeren Einflüssen geschützt. Die Strangzahl bzw. Phasenzahl der Wicklungen 10 sowie die Zahl der zugeordneten Dauermagnete 7 kann der gewünschten Drehzahl bzw. Leistung der Pumpe entsprechend auf an sich bekannte Weise dimensioniert werden.

Zwischen dem Stator und dem Rotor ist ein Spaltrohr 12 aus Kunststoff angeordnet, das über O-Ringe 13 am Motorgehäuse, im dargestellten Ausführungsbeispiel dem Flansch 14 und dem Rohranschluß 17, anliegt. Dieses Spaltrohr 12 dient zum Trennen des Raumes zwischen Stator und Rotor, da der Raum, in dem der Stator angeordnet ist, trocken bleiben muß, der Raum, in dem der Rotor läuft, aber mit Flüssigkeit gefüllt ist, die gepumpt wird.

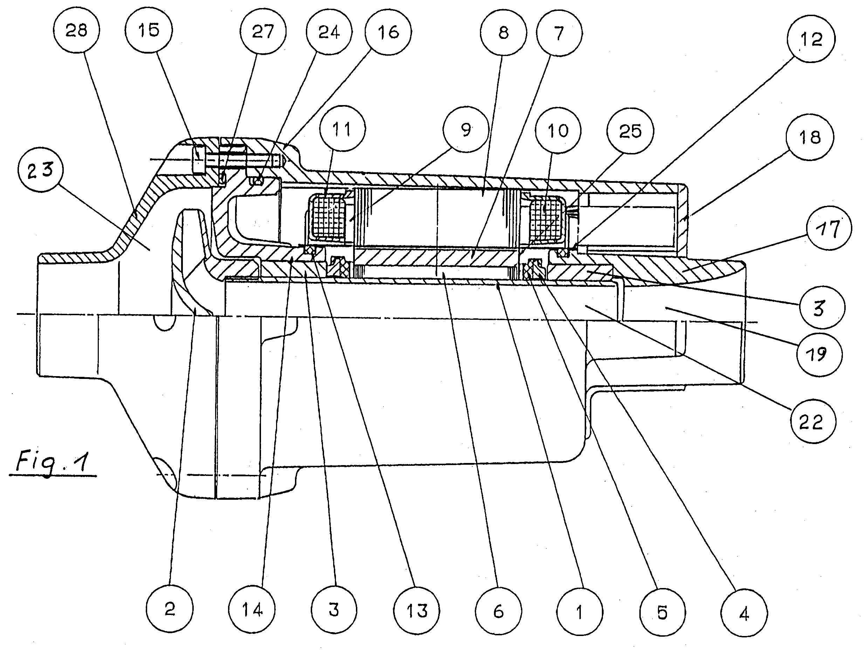

Der Rohranschluß 17 weist eine Bohrung 19 auf, die im Bereich des Überganges zur Bohrung 22 der Rotorwelle 1 einen gleichen Durchmesser wie die Bohrung 22 aufweist und sich zum freien Ende des Rohranschlusses 17 hin erweitert. Über den Rohranschluß 17 wird Flüssigkeit zur Pumpe gefördert. Am Rohranschluß 17 gegenüberliegenden Ende ist das Laufrad 2, im dargestellten Ausführungsbeispiel eine Kreiselpumpe, angeordnet, die in einem Pumpenraum 23 läuft. Dieser Pumpenraum wird einerseits durch den Flansch 14 begrenzt und anderseits im in Fig. 1 dargestellten Ausführungsbeispiel durch ein mittels Schrauben 15 mit dem Motorgehäuse verschraubtes Pumpengehäuse 28. Die Abdichtung zwischen Pumpengehäuse 28 und Flansch 14 erfolgt über einen O-Ring 27. Es ist jedoch auch möglich, anstatt des Pumpengehäuses 28 den Flansch 14 direkt mit einer Wand einer anderen Baueinheit, beispielsweise einer Behälterwand, einer Kühleinheit, od. dgl. zu verschrauben, wobei dann die Wand dieser Baueinheit den Pumpenraum 23 begrenzt. Auf diese Weise ist sowohl das Pumpengehäuse 28, als auch eine zusätzliche Befestigung oder Lagerung der gesamten Pumpe an einem anderen Träger entbehrlich.

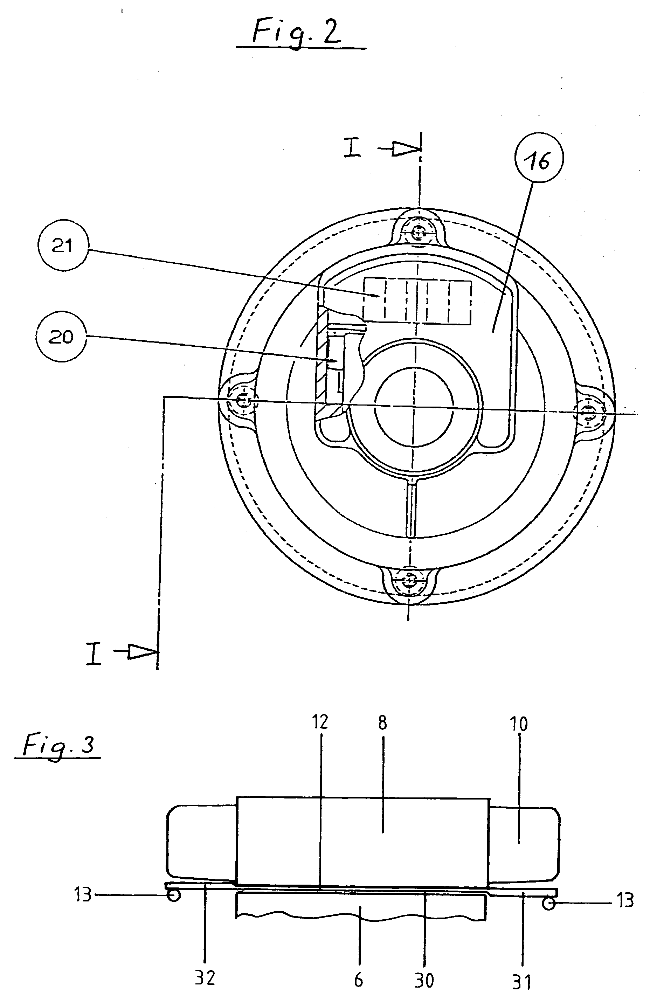

In Fig. 3 ist schematisch eine bevorzugte Ausführungsform eines erfindungsgemäßen Spaltrohres 12 dargestellt, das an der Innenseite des Stators 8 anliegt. Zwischen dem Rotor 6 und dem Spaltrohr 12 liegt ein Spalt 30, der gerade so groß ist, um einen problemlosen Freilauf des Rotors 6 zu gewährleisten. Da das Spaltrohr 12 von außen durch den Stator 8 gestützt wird, kann das Spaltrohr 12 in diesem Bereich eine sehr geringe Wandstärke aufweisen, so daß der Abstand zwischen Rotor 6 und Stator 8 sehr gering gehalten werden kann, wobei des weiteren durch das aus Kunststoff bestehende Spaltrohr 12 keine Behinderung des magnetischen Flusses erfolgt.

Im Bereich der Enden 31 und 32 des Spaltrohres 12, die über den Stator 8 hinausragen, ist die Wandstärke des Spaltrohres 12 so weit verstärkt, daß das Spaltrohr auch ohne Stützung von außen den herrschenden Innendrücken, gegebenfalls bei erhöhten Temperaturen, widersteht.

Wie in Fig. 3 zu sehen ist, weist das Spaltrohr 12 an seinem linken Ende 32 den gleichen Innendurchmesser wie im Mittelbereich des Spaltrohres 12 auf und die Wandstärke des Spaltrohres 12 ist nach außen vergrößert. Am rechten Ende 31 des Spaltrohres 12 ist der Außendurchmesser gleich wie im Mittelbereich ausgeführt und die Wandstärke des Spaltrohres 12 ist nach innen vergrößert.

Auf diese Weise kann das Spaltrohr 12 problemlos von links in den Stator 1 eingeschoben und anschließend der Rotor 6 ebenfalls von dieser Seite in das Spaltrohr 12 eingeschoben werden.

Es versteht sich, daß die vorliegende Erfindung nicht auf im wesentlichen zylindrische Spaltrohre, wie sie in den Zeichnungen dargestellt sind, beschränkt ist, sondern daß diese auch auf Spaltrohre anwendbar ist, die einen eher topfförmigen Querschnitt mit einem zylindermantelförmigen Teil, der zwischen dem Stator und dem Rotor angeordnet ist, angewendet werden kann.

Wie Fig. 1 und Fig. 2 zu entnehmen ist, sind die elektrischen Anschlüsse 21 der Wicklung 10 mit einer Kommutierungselektronik 20 verbunden, welche ein Drehfeld, das auch ein Wechselfeld sein kann, durch leistungselektronische Schalter mit Strom oder Spannungssteuerungsalgorithmen in der elektrischen Maschine erzeugt, welches die Rotorwelle 1 antreibt. Zum Schutz der elektrischen Anschlüsse 21 und der Kommutierungselektronik 20 ist ein Gehäusedeckel 16 vorgesehen, der mit dem Gehäuse der Pumpe verschraubt ist.

Es ist ersichtlich, daß trotz der Unzugänglichkeit der Rotorwelle 1 ein verbessertes Losbrechen bzw. Anlaufen der Rotorwelle 1 gewährleistet ist, da der Elektromotor ein erhöhtes Anlaufmoment aufweist, um das Losbrechen der Rotorwelle 1 zu gewährleisten und der magnetische Fluß zwischen Stator 8 und Rotor 6 nicht durch ein metallisches Spaltrohr 12 oder zu große Wandstärken des Spaltrohres 12 übermäßig behindert wird. Zusammenfassend kann ein Ausführungsbeispiel der Erfindung wie folgt dargestellt werden:

Eine Pumpe, die von einem synchronlaufenden Elektromotor angetrieben wird, weist eine hohl ausgeführte Rotorwelle 1 für die Zufuhr von Flüssigkeit zu einem Laufrad 2 der Pumpe auf, das an einem Ende der Rotorwelle 1 angeordnet ist. Der Raum, in dem der Stator 8 angeordnet ist, und der Raum, in dem der Rotor 6 angeordnet ist, sind flüssigkeitsdicht durch ein Spaltrohr 12 aus Kunststoff voneinander getrennt. Spaltrohre aus Kunststoff weisen den Vorteil auf, daß Sie den Magnetfluß zwischen Stator 8 und Rotor 6 nicht behindern.

Um das Spaltrohr 12 mit möglichst kleiner Wandstärke ausführen zu können, liegt das Spaltrohr 12 an der Innenseite des Stators 8 an, so daß es gegen Innendrücke vom Stator 8 gestützt wird. Damit das Spaltrohr 12 auch in den Randbereichen 31, 32, in denen es nicht vom Stator 8 gestützt wird, nicht durch den Innendruck bricht, ist die Wandstärke des Spaltrohres 12 in den Bereichen 31, 32, in denen es über den Stator 8 hinausragt, größer als im Bereich des Stators 8.

## Patentansprüche

1. Pumpe, die von einem synchronlaufenden Elektromotor angetrieben wird, wobei die Rotorwelle (1) des Elektromotors für die Zufuhr von Flüssigkeit zu einem Laufrad (2) der Pumpe, das an einem Ende der Rotorwelle (1) angeordnet ist, vorzugsweise hohl ausgeführt ist, dadurch gekennzeichnet, daß der Raum, in dem der Stator (8) angeordnet ist, und der Raum, in dem der Rotor (6) angeordnet ist, flüssigkeitsdicht durch ein Spaltrohr (12) aus Kunststoff voneinander getrennt sind.

2. Pumpe nach Anspruch 1, dadurch gekennzeichnet, daß das Spaltrohr (12) an der Innenseite des Stators (8) anliegt.

3. Pumpe nach Anspruch 1, dadurch gekennzeichnet, daß die Wandstärke des Spaltrohres (12) im Bereich, in dem es über den Stator (8) hinausragt, größer als im Bereich des Stators (8) ist.

4. Pumpe nach Anspruch 3, dadurch gekennzeichnet, daß die Wandstärke des Spaltrohres (12) an einem Ende (32) bei im wesentlichen konstantem Innendurchmesser radial nach außen und am anderen Ende (31) bei im wesentlichen konstantem Außendurchmesser radial nach innen vergrößert ist.

5. Pumpe nach einem der Ansprüche 1 bis 3, dadurch gekennzeichnet, daß das Spaltrohr (12) mit Teilen des Stators (8), vorzugsweise mit der Nutisolation (9) einstückig ausgebildet ist.

6. Pumpe nach Anspruch 4 oder 5, dadurch gekennzeichnet, daß die Wandstärke des Spaltrohres (12) an wenigstens einem, vorzugsweise an beiden Enden vergrößert ist.

7. Pumpe nach einem der Ansprüche 1 bis 6, dadurch gekennzeichnet, daß auf der Rotorwelle (1) des Elektromotors Permanentmagnete (7) angeordnet sind, denen ein Stator mit einer Wicklung (10) mit einer Strangzahl sowie einer Phasenzahl gleich oder größer 1 zugeordnet ist.

8. Pumpe nach einem der Ansprüche 1 bis 7, dadurch gekennzeichnet, daß die Wicklungsenden (21) der Wicklung (10) des Stators an eine Kommutierungselektronik (20) angeschlossen sind, welche durch leistungselektronische Schalter ein Drehfeld, gegebenenfalls ein Wechselfeld erzeugt.

9. Pumpe nach einem der Ansprüche 1 bis 8, dadurch gekennzeichnet, daß die Rotorwelle (1) über Lager, vorzugsweise Gleitlager, einerseits in einem Flansch (14) des Gehäuses des Elektromotors und anderseits in einem Rohranschluß (17) des Gehäuses des Elektromotors gelagert ist.

10. Pumpe nach Anspruch 9, dadurch gekennzeichnet, daß der Rohranschluß (17) eine Bohrung (19) aufweist, die an die Bohrung (22) in der Rotorwelle (1) anschließt, die sich vorzugsweise zum freien Ende hin erweitert.

11. Pumpe nach einem der Ansprüche 1 bis 10, dadurch gekennzeichnet, daß das Gehäuse des Elektromotors an seinem dem Laufrad (2) der Pumpe zugewandten Ende einen Flansch (14) aufweist, der einen Pumpenraum (23), in welchem das Laufrad (2) läuft, auf einer Seite begrenzt, und der an einer anderen Baugruppe, beispielsweise einer Behälterwand, Kühleinheit od. dgl. befestigbar ist, und daß der Pumpenraum (23) einerseits vom Flansch (14) und anderseits von der anderen Baueinheit begrenzt wird.
